# EUROPEAN PATENT APPLICATION

(11) **EP 4 549 504 A1**
(43) Date of publication of application: **07.05.2025**
(21) Application number: 23207820.4
(22) Date of filing: 05.11.2023
(51) Int. Cl.: C08J 11/26

(54) **METHOD FOR THE DEPOLYMERIZATION OF SILICONE**

(71) Applicant: Universität Hamburg, 20148 Hamburg (DE)
(72) Inventor: Enthaler, Stephan, 20146 Hamburg (DE)
(74) Representative: Stüven, Ralf

(57) **Abstract**

The invention relates to a method for the depolymerization of silicones, the method comprising the steps of:
a) heating a mixture comprising
i. a silicone,
ii. acetic anhydride and/or a mixture of acetic acid and phosphorus pentoxide,
iii. a swelling agent and
iv. a zinc catalyst to a temperature of 160-200 °C, and

b) holding the temperature for 30-60 min.

## Description

The invention relates to a method for the depolymerization of silicone. The invention further relates to a method for recycling silicone.

In modern societies, silicones (polysiloxanes) are a widely used class of polymers. Application areas range from medicine, electronics, cookware, coatings to constructions. In particular, the large-scale availability through the Müller-Rochow process, in which chloromethane is converted with silicon to form dichlorodimethylsilane as the main product, and the subsequent hydrolysis make polysiloxanes attractive materials. On the one hand, the production of silicones is a complex and energy-intensive process. Additional steps and a high level of energy are required to produce the starting materials for the Müller-Rochow process. Chloromethane, for example, is accessible in a sequence from fossil resources via synthesis gas and methanol. In addition, a large amount of energy is required to produce silicon. On the other hand, end-of-life silicones contribute to the global problem of the accumulation of large amounts of plastic waste.

The modern waste management system for the treatment of man-made end-of-life plastics, including silicones, is mainly based on landfilling, thermal recycling (decomposition for energy purposes), mechanical recycling (processing plastic waste into secondary raw materials) and downcycling into low-quality materials. In contrast, selective decomposition, selective degradation or depolymerization for obtaining valuable building blocks is only carried out on a small proportion of waste. It should be noted in this context that the low-molecular-weight chemicals produced by controlled depolymerization can be used as starting material for new polymers, and thus a chemical recycling of polymers without loss of quality is possible. In addition, the use and development of suitable recycling processes would provide an opportunity to conserve ever-decreasing natural resources and contribute to a sustainable, resource-saving and environmentally compatible society. However, various problems hinder the successful implementation of raw material recycling, for example, the high energy requirements for the depolymerization processes, copolymers, additives, contaminations, selectivity and the currently low price of fossil resources for the production of new polymers (e.g., petroleum, natural gas, coal).

Currently, one of the most important end-of-life treatments for polysiloxanes is thermal decomposition. All integrated functional groups that come from fossil resources, e.g. -CH₃, are converted into environmentally harmful carbon dioxide, and fossil resources are used for the production of new silicones.

Several methods for the depolymerization of polysiloxanes have been described. Enthaler describes, for example, a low-temperature protocol for an iron-catalyzed depolymerization process to yield dichlorodimethylsilane, diacetoxydimethylsilane, or dimethoxydimethylsilane (S. Enthaler, Iron-catalyzed depolymerization of polysiloxanes to produce dichlorodimethylsilane, diacetoxydimethylsilane, or dimethoxydimethylsilane. J. Appl. Polym. Sci. 2015, 132, 41287, doi.org/10.1002/app.41287). Enthaler 2014 describes a zinc-catalyzed depolymerization of end-of-life polysiloxanes at low temperature with benzoyl fluoride producing difluorodimethylsilanes and 1,3-difluoro-1,1,3,3-tetramethyldisiloxanes (S. Enthaler, Zinc-catalyzed depolymerization of end-of-life polysiloxanes. Angew. Chem. Int. Ed. Engl. 2014, 53, 2716-2721, doi.org/10.1002/anie.201309299). Weidauer et al. 2015 describe the iron-catalyzed depolymerizations of end-of-life silicones with fatty alcohols (M. Weidauer, B. Heyder, D. Woelki, M. Tschiersch, A. Köhler-Krützfeldt, S. Enthaler, Iron-catalyzed depolymerizations of end-of-life silicones with fatty alcohols. Resource-Efficient Technologies 2015, 1, 73-79, doi.org/10.1016/j.reffit.2015.09.002). Döhlert and Enthaler 2015 describe a depolymerization protocol for linear, branched, and crosslinked end-of-life silicones with boron trifluoride diethyl etherate as the depolymerization reagent (P. Döhlert, S. Enthaler, Depolymerization protocol for linear, branched, and crosslinked end-of-life silicones with boron trifluoride diethyl etherate as the depolymerization reagent. J. Appl. Polym. Sci. 2015, 132, 42814, doi.org/10.1002/app.42814; see also P. Döhlert, J. Pfrommer, S. Enthaler, Recycling Concept for End-of-Life Silicones: Boron Trifluoride Diethyl Etherate as Depolymerization Reagent to Produce Difluorodimethylsilane as Useful Commodity. ACS Sustainable Chemistry & Engineering 2015 3, 163-169, doi.org/10.1021/sc500666d). Elmanovich et al. 2022 review the main known patterns of thermal and/or catalytic destruction of high-molecular-weight organosilicon compounds from the viewpoint of the prospects for processing their wastes and outline advantages of using supercritical fluids in plastic recycling (I.V. Elmanovich, V.E. Sizov, V.V. Zefirov, A.A. Kalinina, M.O. Gallyamov, V.S. Papkov, A.M. Muzafarov, Chemical Recycling of High-Molecular-Weight Organosilicon Compounds in Supercritical Fluids. Polymers 2022, 14, 5170, doi.org/10.3390/polym14235170). Prior art methods for the depolymerization/recycling of silicones are also known from DE 19502393 A1, EP 1008621 A2, EP 1707570 A2, EP 3744774 B1, US 5110972, US 5491249, US 2021/0301099 A1, WO 98/11155, WO 2014/1230948 A1.

Despite the many attempts to recycle silicones there is still a need for methods that make recycling of silicones more efficient. It is an object of the invention to provide such a method.

In a first aspect the invention provides a method for the depolymerization of silicones, the method comprising the steps of:
a) heating a mixture comprising
   i. a silicone,
   ii. acetic anhydride and/or a mixture of acetic acid and phosphorus pentoxide,
   iii. a swelling agent and
   iv. a zinc catalyst
      to a temperature of 160-200 °C, and
b) holding the temperature for 30-60 min.

The method of the invention provides a cost-effective, reliable and efficient method with which silicone polymers can efficiently be depolymerized, for example in order to enable a chemical recycling of the polymer. The method of the invention converts silicones, for example end-of-life silicones, with a high proportion to diacetoxydimethylsilane or to low molecular weight compounds that can be used as building blocks for the production of new silicone, thus making a chemical recycling of silicones feasible.

The terms "silicone", "polysiloxane", or "poly(organo)siloxane" are used herein for a synthetic polymer or oligomer in which silicon atoms are connected to one another via oxygen atoms in a chain- or network-like manner, wherein the remaining valencies of the silicon are generally saturated by organic groups, e.g., hydrocarbon groups. Silicones differ from organic polymers in that their polymer backbones do not contain carbon. They are thus considered "inorganic" polymers, although they usually contain organic groups. Unbranched (linear) silicones, for example, have a chain ("backbone") of alternating silicon and oxygen atoms, with organic groups, e.g., alkyl, aryl or alkenyl groups, attached to the silicon atoms. A general chemical formula for linear silicones is (R₂SiO)ₙ, where R can be any one of a variety of organic groups, e.g. hydrocarbon groups like vinyl (CH₂), methyl (CH₃) or phenyl (C₆H₅) groups. Silicones thus contain Si-O-Si bonds. A common silicone compound is, for example, polydimethylsiloxane (PDMS), with R being methyl, as represented by the following formula Ia:

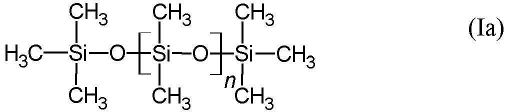

Silicones can be liquids, gels, resins, hard plastics or elastomers (rubbers), depending, for example, on the molecular weight of the polymers and the degree to which the polymer chains are interlinked. Silicones may also be crosslinked (vulcanized, cured) or functionalized, e.g., fluorinated. Crosslinking encompasses addition curing, e.g., with platinum catalysts ("platinum curing", see, for example, R.Y. Lukin, A.M. Kuchkaev, A.V. Sukhov, G.E. Bekmukhamedov, D.G. Yakhvarov, Platinum-Catalyzed Hydrosilylation in Polymer Chemistry. Polymers 2020, 12, 2174. doi.org/10.3390/polym12102174), or peroxide curing. Silicones can widely vary in their -Si-O- chain lengths, kind and number of side groups (number of R can be = 0, 1, 2, 3), and crosslinking (with (RSiO₃)ₙ or (SiO₄)ₙ), and thus have a wide variety of properties and compositions. The terms "silicone", "polysiloxane", or "poly(organo)siloxane" also encompass mixtures of different silicone polymers. The terms further encompass silicone copolymers, for example silicone-organic copolymers, i.e., silicone containing block or segmented copolymers composed of silicone and organic polymers, e.g., poly(ethylene glycol) (PEG), polyesters or polyamides. An example of such a copolymer would be a compound of formula Ia above, where at least one of the Si(CH₃)₃ end groups is replaced by R', R' being an organic polymer.

The term "swelling agent" relates to a chemical compound causing swelling of a silicone, in particular a silicone rubber. "Swelling" is the volume expansion of a silicone, in particular a silicone rubber, caused, for example, by infiltration of a compound into the three-dimensional macromolecule structure of the polymer. For a test method that can be used to determine the swelling index of a silicone rubber see, for example, Wu et al. 2022 (T. Wu, M. Huang, X. Liu, H. Feng, M. Shao, H. Cai, Characterization Method for the Swelling Effect of an Insulating Washing Agent on Silicone Rubber in Power Systems. ACS Omega 2022, 7, 46, 42331-42338, doi.org/10.1021/acsomega.2c05367). A swelling agent can, for example, be an alkane, in particular a higher alkane. An example of a suitable alkane is decane, a higher alkane having the chemical formula C₁₀H₂₂. The term "decane" encompasses any structural isomers of the compound. The term "n-decane" relates to a decane isomer with the chemical formula CH₃(CH₂)₈CH₃. Another example of a swelling agent is "diacetoxydimethylsilane".

The term "alkane" relates to acyclic or cyclic aliphatic saturated hydrocarbons, acyclic alkanes having the general formula CₙH₂ₙ₊₂. The term "higher alkanes" used herein relates to alkanes having nine or more carbon atoms. Examples of higher (acyclic) alkanes are nonane, decane or undecane.

The term "alkyl" comprises saturated aliphatic (non-aromatic) groups including straight-chain (linear) alkyl groups (e.g. methyl, ethyl, propyl, butyl, pentyl, hexyl, heptyl and octyl), and branched alkyl groups (e.g. isopropyl, tert-butyl, isobutyl). The term also encompasses O, N, S or P alkyl groups (e.g., -O-methyl), i.e. alkyl groups which are bound to a compound via an oxygen, nitrogen, sulfur or phosphorus atom.

The term "aryl" means chemical groups with aromaticity, including multi-membered aromatic single ring groups and multicyclic systems with at least one aromatic ring. Examples of aryl groups include benzene, phenyl and naphthalene. The term also includes O-, N-, S- or P-aryl groups, i.e. aryl groups bound to a compound via an oxygen, nitrogen, sulfur or phosphorus atom.

The term "alkenyl" comprises unsaturated aliphatic (non-aromatic) groups having at least one C-C double bond, including straight-chain and branched alkenyl groups. The term also includes O-, N-, S- or P-alkenyl groups (e.g., -O-propenyl), i.e. alkenyl groups bound to a compound via an oxygen, nitrogen, sulfur or phosphorus atom.

The term "acetic anhydride" (CAS 108-24-7, ethanoic anhydride), abbreviated Ac₂O, relates to a chemical compound having the chemical formula C₄H₆O₃ ((CH₃CO)₂O).

The term "acetic acid" (CAS 64-19-7), abbreviated AcOH, relates to a chemical compound having the chemical formula C₂H₄O₂ (CH₃COOH).

The term "phosphorus pentoxide" relates to a chemical compound having the chemical formula P₄O₁₀ (CAS 16752-60-6). The term encompasses any chemical compound having the empirical chemical formula P₂O₅ (CAS 1314-56-3).

The term "diacetoxydimethylsilane" (CAS 2182-66-3) relates to a chemical compound having the chemical formula C₆H₁₂O₄Si ((AcO)₂Si(CH₃)₂).

The term "trimethylsilylacetate" (CAS 2754-27-0) relates to a chemical compound having the chemical formula C₅H₁₂O₂Si ((AcO)Si(CH₃)₃).

The term "triacetoxymethylsilane" (CAS 4253-34-3) relates to a chemical compound having the chemical formula C₇H₁₂O₆Si ((AcO)₃SiCH₃).

The term "tetraacetoxysilane" (CAS 562-90-3) relates to a chemical compound having the chemical formula C₈H₁₂O₈Si ((AcO)₄Si).

The term "branching unit" in relation to a silicone polymer can relate to a silicone having at least one Si atom to which three oxygen atoms are bound, -OSi(R)O₂-, R being, for example, a monovalent organic group, e.g., CH₃.

The term "crosslinking units" in relation to a silicone polymer can relate to a silicone having at least one Si atom to which four oxygen atoms are bound, -OSiO₃-.

The term "Platinum cured units depolymerization product" relates to a chemical compound resulting from the depolymerization of a platinum-cured silicone polymer, i.e., a silicone crosslinked by platinum catalyzed hydrosilylation of olefin units and Si-H units. Platinum cured units depolymerization products can, for example, be the following:
(AcO)₃SiCH₂CH₂Si(OAc)₃, (AcO)₂Si(CH₃)CH₂CH₂Si(CH₃)(OAc)₂, or
AcOSi(CH₃)₂CH₂CH₂Si(CH₃)₂OAc.

The term "zinc catalyst" relates to a compound containing zinc (Zn), preferably having the oxidation state of +2, and being catalytically active in the depolymerization of silicone. A zinc catalyst can, for example, have the structure ZnR¹R², with R¹ and R² being identical or different and being anionic ligands, or have the structure ZnR¹R²Lₙ, with R¹ and R² being as defined above, and L being donor atoms of additional ligands (n = 0-6). Examples of zinc catalyst comprise zinc trifluoromethanosulfonate (Zn(OTf)₂, zinc triflate), zinc acetate (Zn(OAc)₂), zinc formate (Zn(OOCH)₂), zinc methacrylate (Zn(MA)₂), zinc halide (e.g., ZnCl₂, ZnF₂, ZnBr₂, ZnI₂), zinc nitrate, zinc phosphate, zinc sulfate, zinc perchlorate, zinc tetrafluoroborate, zinc carbonate, zinc hydroxide, zinc amide, zinc alkoxide, zinc aryloxide, zinc alkoxide aryloxide, zinc alkyl, zinc aryl and zinc oxide (ZnO). The terms and chemical formulas used above for the zinc catalyst encompass any hydrates or solvates of the compounds.

The terms "zinc triflate" or "zinc(II) triflate", (Zn(OTf)₂) relate to the chemical compound zinc trifluoromethanesulfonate (CAS 54010-75-2) having the chemical formula ZnC₂F₆O₆S₂.

Terms like "end-of-life silicone", "end-of-life polysiloxane" or "end-of-life poly(organo)siloxane" refer to silicone waste material, i.e., a used and/or aged silicone material, or a mixture of used and/or aged silicones materials that would be subjected to a recycling or waste disposal process. The term "silicone material" refers to any material being composed of or containing silicone, in particular to any material containing at least 0.5 % silicone by weight, preferably at least 1, 2, 3 4, 5 or 10 % by weight of silicone. The abbreviation EoL may also be used for the term "End-of-Life".

The term "monomer" in relation to a silicone, e.g., polydimethylsiloxane (PDMS) refers to molecules, which can undergo polymerization, thereby contributing constitutional units ("building blocks") to the essential structure of the resulting polymer. Diacetyoxydimethylsilane (C₆H₁₂O₄Si), triacetoxymethylsilane (C₇H₁₂O₆Si), tetraacetoxysilane (C₈H₁₂O₈Si) and Platinum cured units depolymerization products are examples of silicone monomers.

The term "repeating unit" in relation to a silicon (PDMS), refers to the respective smallest constitutional unit the repetition of which constitutes the polymer, for example, R₂SiO (e.g., Si(CH₃)₂O). In case of a silicone of unknown composition, Si(CH₃)₂O (molecular weight: 74.15 g/mol) is assumed to be the repeating unit.

A term like "x equivalents of y, based on the repeating unit of the silicone" means that y is present or added in a molar amount x times the amount of the repeating unit bound in the silicone. An amount of 2 equivalents of acetic anhydride, based on the repeating unit of the silicone, thus means that, for an amount of 3 mol silicone repeating unit, e.g. Si(CH₃)₂O, 6 mol acetic anhydride are added or present.

A term like "x mol % of y, based on the repeating unit of the silicone" means that, for each mol of repeating unit x mol % y are used. For example, a presence of 1 mol % of the zinc catalyst means that, in case of a silicone with 3.4 mol repeating unit, e.g., Si(CH₃)₂O, 1 % of 3.4 mol, i.e., 0.034 mol catalyst are present.

The term "mixture comprising a silicone, acetic anhydride and/or acetic acid and phosphorus pentoxide, swelling agent and a zinc catalyst" relates to any mixture containing or being composed of the compounds mentioned, irrespective of the order in which the components are added to the mixture.

The term "catalyst" refers to any substance, compound or material that modifies and/or increases the rate of a chemical reaction without itself undergoing any permanent chemical change in the reaction. The term "zinc catalyst" refers to a catalyst containing zinc (Zn), for example, zinc(II) triflate.

Number ranges such as "160-200" are always to be understood in such a way that every intermediate value is also disclosed. Any smaller range within a given range is thus meant to also be disclosed. This also applies for a smaller range that does not include any of the limit values of the broader range. A range like "160-200" thus includes not only ranges like "160-190" or "190-200", but also ranges of "180-190" or "185-195" or "183-199", where the individual values within the range are expressly encompassed, and not just the limit values.

The expressions "Cₙ - Cₘ" or "Cₙ₋ₘ", wherein n and m are each positive whole numbers and m is larger than n, signifies a range which gives the number of C atoms of a compound or a residue. The expression here expressly includes all integral intermediate numbers between the limits n and m, respectively independently of each other. The expression "C₉-C₁₆" (n=9, m=16) or C₉₋₁₆, thus means a compound, a group or a residue containing 1-10, i.e., 9, 10, 11, 12, 13, 14, 15 or 16 C atoms. Thus, "C₉-C₁₆" at the same time includes, for example, "C₁₀-C₁₅", i.e. 10, 11, 12, 13, 14 or 15 C atoms, or "C₉-C₁₄", i.e. 9, 10, 11, 12, 13 or 14 C atoms, or "C₁₄-C₁₆", i.e. 14, 15 or 16 C atoms. Similarly, the expression "C₉-C₁₆ alkane" or "C₉-₁₆ alkane", for example, means an alkyl compound or group containing 9, 10, 11, 12, 13, 14, 15 or 16 C atoms and includes all combinations of values of n and m in the range from n=9 to m=16; for example, "C₁₀-C₁₂ alkyl" means an alkyl containing 10, 11 or 12 C atoms.

The terms "holding time" or "hold time" refer to a period of time during which a respective heating temperature is maintained.

In a preferred embodiment of the method of the invention the zinc catalyst is selected from the group consisting of zinc trifluoromethanesulfonate (zinc(II) triflate), zinc acetate (Zn(OAc)₂), zinc formate (Zn(OOCH)₂), zinc methacrylate (Zn(MA)₂), zinc halide (e.g., ZnCl₂, ZnF₂, ZnBr₂, ZnI₂), zinc nitrate, zinc phosphate, zinc sulfate, zinc perchlorate, zinc tetrafluoroborate, zinc carbonate, zinc hydroxide, zinc amide, zinc alkoxide, zinc aryloxide, zinc alkoxide aryloxide, zinc alkyl, zinc aryl and zinc oxide (ZnO). Preferably, the zinc catalyst is zinc trifluoromethanesulfonate (zinc(II) triflate).

Only a catalytic amount of the zinc catalyst has to be present in the mixture. In a preferred embodiment of the method of the invention 0.01-10 mol %, preferably 0.1-10 mol %, 0.1-8.0 mol %, 0.1-5.0 mol %, 0.1-2.0 mol %, 0.1-1.0 mol %, 0.25-1.5 mol %, 0.5-1.5 mol %, or 0.5-1.0 mol %, further preferred 1.0 mol % of the zinc catalyst, are present in the mixture, based on the molar amount of repeating unit, e.g., Si(CH₃)₂O, of the silicone in the mixture. In a further preferred embodiment 1 mol %, based on the repeating unit of the silicone, of zinc(II) triflate is present in the mixture.

In a preferred embodiment of the method of the invention 1-20, preferably 1-15, more preferably 1-10 equivalents acetic anhydride, based on the repeating unit of the silicone, are present in the mixture. Preferably, an excess of acetic anhydride is present in the mixture. In a further preferred embodiment of the method of the invention 1.5-10 equivalents or 2-10 equivalents acetic anhydride, based on the repeating unit of the silicone, e.g., Si(CH₃)₂O, are present in the mixture. Acetic anhydride may be initially provided in the mixture together with the other components, i.e., before heating the mixture. Alternatively, or additionally, however, phosphorus pentoxide and acetic acid may initially be provided in the mixture in such amounts and proportions that 1-20, preferably 1-15, more preferably 1-10 equivalents acetic anhydride, based on the repeating unit of the silicone, are formed in the mixture under the reaction conditions of the method of the invention and in the course of the reaction. Acetic anhydride is formed according to the following chemical equation:

12CH₃COOH + P₄O₁₀ = 6C₄H₆O₃ + 4H₃PO₄

It should be noted that a wording, according to which x equivalents acetic anhydride, based on the repeating unit of the silicone, are present in the mixture encompasses that the x equivalents acetic anhydride are formed from phosphorus pentoxide and acetic acid under the reaction conditions and in the course of the reaction, i.e., at the beginning and/or during the heating of the mixture. The wording thus encompasses the presence of enough educts (phosphorus pentoxide and acetic acid) in the mixture to allow the formation of x equivalents of acetic anhydride under the reaction conditions of the method of the invention. Further, it is to be understood that, in case acetic anhydride is already initially provided in the mixture together with phosphorus pentoxide and acetic acid, phosphorus pentoxide and acetic acid are preferably initially added in such amounts and proportions as to provide, together with the acetic anhydride already present in the mixture, the above-mentioned equivalents of acetic anhydride during the reaction.

The swelling agent is preferably selected from the group consisting of C₉₋₁₆ alkane, the C₉₋₁₆ alkane preferably being decane, more preferably n-decane, and diacetoxydimethylsilane, or a mixture thereof. In a further preferred embodiment of the method of the invention 0.5-20, preferably 0.5-15, more preferably 0.5-10 equivalents of the swelling agent, based on the repeating unit of the silicone, are present in the mixture, the swelling agent being preferably a C₉₋₁₆ alkane, further preferred decane, more preferably n-decane, or diacetoxydimethylsilane. In a preferred embodiment the swelling agent is n-decane or diacetoxydimethylsilane, or a mixture of n-decane and diacetoxydimethylsilane. Use of diacetoxydimethylsilane is advantageous since it is also a product of the depolymerization reaction and thus enhances sustainability.

In a preferred embodiment of the method of the invention the mixture is heated to a temperature in a range of 170-190 °C, more preferably 175-185 °C, most preferred to a temperature of 180 °C, and the temperature is held, i.e., maintained, for 50-120 min, preferably 50-100 min, more preferably 50-80 min, more preferably 50-60 min, more preferably 55-60 min, most preferred 60 min.

In a preferred embodiment of the method of the invention the steps a of heating the mixture and step b of holding the temperature at a given value are carried out in a sealed container.

In a preferred embodiment of the method of the invention, the heating is carried out under agitation of the mixture to be heated, e.g., agitation by stirring or any other kind of mixing. In this preferred embodiment, the mixture is thus agitated, e.g., stirred or otherwise mixed during steps a and b. Mixing may, for example, include mixing in a screw extruder.

The silicone can be of any composition or origin, and may, for example be a silicone oil or silicone rubber. In a further preferred embodiment of the method of the invention the silicone is an end-of-life silicone.

In a further preferred embodiment of the method of the invention, the method further comprises the step of repolymerization of a silicone from at least part of the products of the depolymerization. This may comprise the enrichment, isolation and/or purification of the monomers, e.g., diacetoxydimethylsilane, triacetoxymethylsilane, tetraacetoxysilane and "Platinum cured units depolymerization products", obtained by the depolymerization. The monomers can, for example, be distilled from the resulting mixture of products of the depolymerization and directly be used to synthesize new silicone. The repolymerization step may also comprise a step of hydrolyzing monomers, e.g., diacetoxydimethylsilane, tetraacetoxysilane and/or "Platinum cured units depolymerization products" obtained by the depolymerization. The hydrolyzed monomers can also be used to repolymerize new silicone. This would also allow for the recovery and optional recycling of acetic anhydride via reacting acetic acid produced by the hydrolysis with phosphorus pentoxide, as described above. Acetic acid produced as a hydrolysis product can thus be reused in the method of the invention and replace, together with phosphorus pentoxide as reactant, at least part of the acetic anhydride used in the depolymerization method.

In a further preferred embodiment of the method of the invention, the method of the invention comprises the step c) of hydrolyzing the silicone monomers obtained by the depolymerization, and recovering acetic anhydride by reacting the hydrolysis product acetic acid with phosphorus pentoxide.

In the method of the invention, it is preferred that the starting compounds silicone, acetic anhydride, swelling agent and zinc catalyst make up the mixture that is to be heated, i.e., the mixture is preferably composed of suitable amounts of silicone, acetic anhydride, swelling agent and zinc catalyst. It is in any case preferred that benzoyl fluoride is absent from the mixture.

In a particular preferred embodiment of the invention the method comprises the following steps:
1) providing, preferably in a sealed container, a mixture comprising or consisting of
   i. a silicone,
   ii. acetic anhydride and/or acetic acid and phosphorus pentoxide,
   iii. a swelling agent and
   iv. a zinc catalyst
2) heating the mixture to a temperature of 160-200 °C, and
3) holding the temperature for 30-60 min.
4) isolating the monomers obtained from steps 1-3 above,
5) hydrolyzing the isolated monomers obtained in step 4,
6) polymerizing a silicone from the isolated and/or hydrolyzed monomers obtained in step 5, and
7) recovering acetic anhydride by reacting the acetic acid obtained in the hydrolysis step 5 with phosphorus pentoxide.

In a further aspect the invention relates to a method for recycling silicone, the method comprising carrying out a depolymerization method as described above, and the subsequent polymerization of a silicone from products obtained by the depolymerization method. Products obtained by the depolymerization method may be monomers produced as a directed product of steps a and b, or products obtained from subsequent hydrolysis of the depolymerization products. The silicone produced by the polymerization may be identical to or differ from the depolymerized silicone, i.e., the silicone from which the monomers for the recycling method are obtained. In the recycling method, it may be advantageous or necessary to carry out a step of enriching, isolating or purifying the monomers, e.g., diacetoxydimethylsilane, obtained by the depolymerization method, and/or a step of hydrolyzing the monomers, e.g., diacetoxydimethylsilane, obtained by the depolymerization method, before carrying out the polymerization. In the recycling method, acetic anhydride may be recovered by reacting acetic acid resulting form the hydrolysis of the monomers with phosphorus pentoxide.

In the following, the invention will be described in further detail by way of example only with reference to the accompanying figure.

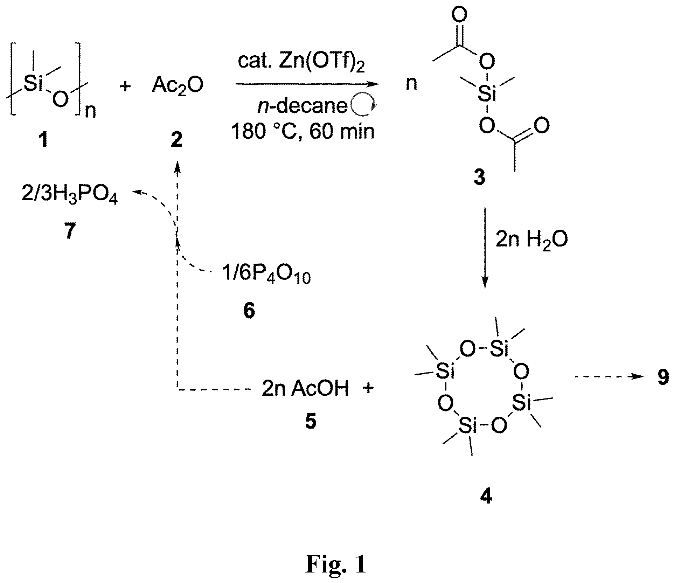

Figure 1. Schematic diagram of an embodiment of a method of the invention.

Figure 1 shows a simplified reaction scheme for a recycling process involving an embodiment of the method of the invention. A silicone **1** is catalytically depolymerized in the presence of acetic anhydride **2** (Ac₂O), n-decane as swelling agent, and catalytic amounts of zinc triflate (Zn(OTf)₂, at a temperature of 180 °C for 60 min. yielding diacetoxydimethylsilane **3**. Diacetoxydimethylsilane **3** can be directly used for the repolymerization of new silicone, e.g., after isolation, or hydolyzed. Subsequent hydrolysis of the diacetoxydimethylsilane **3** yields octamethylcyclotetrasiloxane **4** that can be used to produce new silicone **9**, and acetic acid **5**. Acetic acid **5** can be reacted with phosphorus pentoxide **6** (P₄O₁₀, Tetraphosphorus decaoxide, CAS 16752-60-6) to acetic anhydride **2** and phosphorus acid **7**. At least part of the acetic anhydride **2** consumed can be recovered in that manner.

### Examples

General: All chemicals were used as received without further manipulations. ¹H NMR spectra were recorded on a Fourier 300 MHz (¹H: 300 MHz) or Avance I-400 (¹H: 400 MHz) by Bruker, using the proton signals of the deuterated solvents as reference.

Diacetoxydimethylsilane (**3**): ¹H NMR (500 MHz, CDCl₃, 25 °C): δ = 2.03 (6H, (CH₃)₂Si(OOCCH₃)₂) 0.44 (6H, (CH₃)₂Si(OAc)₂) ppm.

All calculations in relation to the repeating unit of silicones of unknown composition are based on the assumption that Si(CH₃)₂O (MW 74.15) is the repeating unit.

### Example 1 (comparative example, not according to the invention):

A mixture of poly(dimethylsiloxane) (**1**, end-of-life silicone oil) (250 mg, 3.37 mmol based on the repeating unit) and acetic anhydride (688.4 mg, 5.05 mmol, 2 equiv. based on the repeating unit of **1**) was placed with a stir bar in a flask. The flask was sealed and the mixture was heated to 160 °C. The reaction was performed for 300 minutes (hold time) at 160 °C and with a stirring of 400 rpm. After cooling to room temperature toluene was added as standard. An aliquot of the reaction mixture was dissolved in CDCl₃ and the solution was transferred to an NMR tube. A yield of <1% for diacetoxydimethylsilane **3** was noticed.

### Example 2 (comparative example, not according to the invention):

A mixture of poly(dimethylsiloxane) (**1**, end-of-life silicone oil) (250 mg, 3.37 mmol based on the repeating unit), acetic anhydride (688.4 mg, 5.05 mmol, 2 equiv. based on the repeating unit of **1**) and catalytic amounts of sulfuric acid (3.3 mg, 1.0 mol%, 0.034 mmol based on the repeating unit of **1**) was placed with a stir bar in a flask. The flask was sealed and the mixture was heated to 160 °C. The reaction was performed for 300 minutes (hold time) at 160 °C and with a stirring of 400 rpm. After cooling to room temperature toluene was added as standard. An aliquot of the reaction mixture was dissolved in CDCl₃ and the solution was transferred to an NMR tube. A yield of 28% for diacetoxydimethylsilane **3** and 64% of oligomers was noticed. Overall, a depolymerization rate of 92% was calculated.

### Example 3 (comparative example, not according to the invention):

A mixture of poly(dimethylsiloxane) (**1**, end-of-life silicone oil) (250 mg, 3.37 mmol based on the repeating unit), acetic anhydride (688.4 mg, 5.05 mmol, 2 equiv. based on the repeating unit of 1) and catalytic amounts of phosphoric acid (3.3 mg, 1.0 mol%, 0.034 mmol based on the repeating unit of **1**) was placed with a stir bar in a flask. The flask was sealed and the mixture was heated to 160 °C. The reaction was performed for 300 minutes (hold time) at 160 °C and with a stirring of 400 rpm. After cooling to room temperature toluene was added as standard. An aliquot of the reaction mixture was dissolved in CDCl₃ and the solution was transferred to an NMR tube. A yield of 10% for diacetoxydimethylsilane **3** and 28% of oligomers was noticed. Overall, a depolymerization rate of 38% was calculated.

### Example 4 (comparative example, not according to the invention):

A mixture of poly(dimethylsiloxane) (**1**, end-of-life silicone oil) (250 mg, 3.37 mmol based on the repeating unit), acetic anhydride (688.4 mg, 5.05 mmol, 2 equiv. based on the repeating unit of **1**) and catalytic amounts of zinc(II) triflate (12.3 mg, 1.0 mol%, 0.034 mmol based on the repeating unit of **1**) was placed with a stir bar in a flask. The flask was sealed and the mixture was heated to 160 °C. The reaction was performed for 300 minutes (hold time) at 160 °C and with a stirring of 400 rpm. After cooling to room temperature toluene was added as standard. An aliquot of the reaction mixture was dissolved in CDCl₃ and the solution was transferred to an NMR tube. A yield of 46% for diacetoxydimethylsilane **3** and 44% of oligomers was noticed. Overall, a depolymerization rate of 90% was calculated.

### Example 5 (comparative example, not according to the invention):

A mixture of poly(dimethylsiloxane) (**1**, end-of-life silicone oil) (250 mg, 3.37 mmol based on the repeating unit), acetic anhydride (688.4 mg, 5.05 mmol, 2 equiv. based on the repeating unit of **1**) and catalytic amounts of zinc(II) triflate (30.6 mg, 2.5 mol%, 0.085 mmol based on the repeating unit of **1**) was placed with a stir bar in a flask. The flask was sealed and the mixture was heated to 160 °C. The reaction was performed for 300 minutes (hold time) at 160 °C and with a stirring of 400 rpm. After cooling to room temperature toluene was added as standard. An aliquot of the reaction mixture was dissolved in CDCl₃ and the solution was transferred to an NMR tube. A yield of 56% for diacetoxydimethylsilane **3** and 38% of oligomers was noticed. Overall, a depolymerization rate of 94% was calculated.

### Example 6:

A mixture of poly(dimethylsiloxane) (**1**, end-of-life silicone oil) (250 mg, 3.37 mmol based on the repeating unit), acetic anhydride (688.4 mg, 5.05 mmol, 2 equiv. based on the repeating unit of **1**), n-decane (250 mg, 1.76 mmol, 0.52 equiv. based on the repeating unit) and catalytic amounts of zinc(II) triflate (12.3 mg, 1.0 mol%, 0.034 mmol based on the repeating unit of **1**) was placed with a stir bar in a flask. The flask was sealed and the mixture was heated to 160 °C. The reaction was performed for 300 minutes (hold time) at 160 °C and with a stirring of 400 rpm. After cooling to room temperature toluene was added as standard. An aliquot of the reaction mixture was dissolved in CDCl₃ and the solution was transferred to an NMR tube. A yield of 57% for diacetoxydimethylsilane **3** and 31% of oligomers was noticed. Overall, a depolymerization rate of 88% was calculated.

### Example 7:

A mixture of poly(dimethylsiloxane) (**1**, end-of-life silicone oil) (250 mg, 3.37 mmol based on the repeating unit), acetic anhydride (688.4 mg, 5.05 mmol, 2 equiv. based on the repeating unit of **1**), n-decane (500 mg, 3.52 mmol, 1.24 equiv. based on the repeating unit) and catalytic amounts of zinc(II) triflate (12.3 mg, 1.0 mol%, 0.034 mmol based on the repeating unit of **1**) was placed with a stir bar in a flask. The flask was sealed and the mixture was heated to 160 °C. The reaction was performed for 300 minutes (hold time) at 160 °C and with a stirring of 400 rpm. After cooling to room temperature toluene was added as standard. An aliquot of the reaction mixture was dissolved in CDCl₃ and the solution was transferred to an NMR tube. A yield of 52% for diacetoxydimethylsilane **3** and 38% of oligomers was noticed. Overall, a depolymerization rate of 90% was calculated.

### Example 8 (comparative example, not according to the invention):

A mixture of poly(dimethylsiloxane) (**1**, end-of-life silicone oil) (250 mg, 3.37 mmol based on the repeating unit), acetic anhydride (688.4 mg, 5.05 mmol, 2 equiv. based on the repeating unit of **1**) and catalytic amounts of tin(II) 2-ethylhexanoate (13.7 mg, 1.0 mol%, 0.034 mmol based on the repeating unit of **1**) was placed with a stir bar in a flask. The flask was sealed and the mixture was heated to 160 °C. The reaction was performed for 300 minutes (hold time) at 160 °C and with a stirring of 400 rpm. After cooling to room temperature toluene was added as standard. An aliquot of the reaction mixture was dissolved in CDCl₃ and the solution was transferred to an NMR tube. A yield of 4% for diacetoxydimethylsilane **3** and 4% of oligomers was noticed. Overall, a depolymerization rate of 8% was calculated.

### Example 9 (comparative example, not according to the invention):

A mixture of poly(dimethylsiloxane) (**1**, end-of-life silicone oil) (250 mg, 3.37 mmol based on the repeating unit), acetic anhydride (688.4 mg, 5.05 mmol, 2 equiv. based on the repeating unit of **1**) and catalytic amounts of nickel(II) triflate (10.7 mg, 1.0 mol%, 0.034 mmol based on the repeating unit of **1**) was placed with a stir bar in a flask. The flask was sealed and the mixture was heated to 160 °C. The reaction was performed for 300 minutes (hold time) at 160 °C and with a stirring of 400 rpm. After cooling to room temperature toluene was added as standard. An aliquot of the reaction mixture was dissolved in CDCl₃ and the solution was transferred to an NMR tube. A yield of 29% for diacetoxydimethylsilane **3** and 5% of oligomers was noticed. Overall, a depolymerization rate of 34% was calculated.

### Example 10 (comparative example, not according to the invention):

A mixture of poly(dimethylsiloxane) (**1**, end-of-life silicone oil) (250 mg, 3.37 mmol based on the repeating unit), acetic anhydride (688.4 mg, 5.05 mmol, 2 equiv. based on the repeating unit of **1**) and catalytic amounts of lithium triflate (5.3 mg, 1.0 mol%, 0.034 mmol based on the repeating unit of **1**) was placed with a stir bar in a flask. The flask was sealed and the mixture was heated to 160 °C. The reaction was performed for 300 minutes (hold time) at 160 °C and with a stirring of 400 rpm. After cooling to room temperature toluene was added as standard. An aliquot of the reaction mixture was dissolved in CDCl₃ and the solution was transferred to an NMR tube. A yield of <1% for diacetoxydimethylsilane **3** and 9% of oligomers was noticed. Overall, a depolymerization rate of 9% was calculated.

### Example 11 (comparative example, not according to the invention):

A mixture of poly(dimethylsiloxane) (**1**, end-of-life silicone oil) (250 mg, 3.37 mmol based on the repeating unit), acetic anhydride (688.4 mg, 5.05 mmol, 2 equiv. based on the repeating unit of **1**) and catalytic amounts of 1,8-diazabicyclo[5.4.0]undec-7-en (5.2 mg, 1.0 mol%, 0.034 mmol based on the repeating unit of **1**) was placed with a stir bar in a flask. The flask was sealed and the mixture was heated to 160 °C. The reaction was performed for 300 minutes (hold time) at 160 °C and with a stirring of 400 rpm. After cooling to room temperature toluene was added as standard. An aliquot of the reaction mixture was dissolved in CDCl₃ and the solution was transferred to an NMR tube. A yield of 3% for diacetoxydimethylsilane **3** and 4% of oligomers was noticed. Overall, a depolymerization rate of 7% was calculated.

### Example 12 (comparative example, not according to the invention):

A mixture of poly(dimethylsiloxane) (**1**, end-of-life silicone oil) (250 mg, 3.37 mmol based on the repeating unit), acetic anhydride (1030 mg, 10.11 mmol, 3 equiv. based on the repeating unit of **1**) and catalytic amounts of zinc(II) triflate (12.3 mg, 1.0 mol%, 0.034 mmol based on the repeating unit of **1**) was placed with a stir bar in a flask. The flask was sealed and the mixture was heated to 160 °C. The reaction was performed for 300 minutes (hold time) at 160 °C and with a stirring of 400 rpm. After cooling to room temperature toluene was added as standard. An aliquot of the reaction mixture was dissolved in CDCl₃ and the solution was transferred to an NMR tube. A yield of 72% for diacetoxydimethylsilane **3** and 22% of oligomers was noticed. Overall, a depolymerization rate of 94% was calculated.

### Example 13:

A mixture of poly(dimethylsiloxane) (**1**, end-of-life silicone oil) (500 mg, 6.74 mmol based on the repeating unit), acetic anhydride (1030 mg, 10.11 mmol, 1.5 equiv. based on the repeating unit of **1**), n-decane (500 mg, 3.51 mmol, 0.52 equiv. based on the repeating unit) and catalytic amounts of zinc(II) triflate (24.5 mg, 1.0 mol%, 0.07 mmol based on the repeating unit of **1**) was placed with a stir bar in a flask. The flask was sealed and the mixture was heated to 200 °C. The reaction was performed for 30 minutes (hold time) at 200 °C and with a stirring of 400 rpm. After cooling to room temperature toluene was added as standard. An aliquot of the reaction mixture was dissolved in CDCl₃ and the solution was transferred to an NMR tube. A yield of 42% for diacetoxydimethylsilane **3** and 48% of oligomers was noticed. Overall, a depolymerization rate of 90% was calculated.

### Example 14:

A mixture of poly(dimethylsiloxane) (**1**, end-of-life silicone oil) (250 mg, 3.37 mmol based on the repeating unit), acetic anhydride (1721 mg, 16.86 mmol, 5 equiv. based on the repeating unit of **1**), n-decane (250 mg, 1.76 mmol, 0.52 equiv. based on the repeating unit) and catalytic amounts of zinc(II) triflate (12.3 mg, 1.0 mol%, 0.034 mmol based on the repeating unit of **1**) was placed with a stir bar in a flask. The flask was sealed and the mixture was heated to 180 °C. The reaction was performed for 60 minutes (hold time) at 180 °C and with a stirring of 400 rpm. After cooling to room temperature toluene was added as standard. An aliquot of the reaction mixture was dissolved in CDCl₃ and the solution was transferred to an NMR tube. A yield of 47% for diacetoxydimethylsilane **3** and 41% of oligomers was noticed. Overall, a depolymerization rate of 88% was calculated.

### Example 15:

A mixture of poly(dimethylsiloxane) (**1**, end-of-life silicone oil) (250 mg, 3.37 mmol based on the repeating unit), acetic anhydride (3442 mg, 33.72 mmol, 10 equiv. based on the repeating unit of **1**), n-decane (250 mg, 1.76 mmol, 0.52 equiv. based on the repeating unit) and catalytic amounts of zinc(II) triflate (12.3 mg, 1.0 mol%, 0.034 mmol based on the repeating unit of **1**) was placed with a stir bar in a flask. The flask was sealed and the mixture was heated to 180 °C. The reaction was performed for 30 minutes (hold time) at 180 °C and with a stirring of 400 rpm. After cooling to room temperature toluene was added as standard. An aliquot of the reaction mixture was dissolved in CDCl₃ and the solution was transferred to an NMR tube. A yield of 77% for diacetoxydimethylsilane **3** and 12% of oligomers was noticed. Overall, a depolymerization rate of 89% was calculated.

### Example 16:

A mixture of poly(dimethylsiloxane) (**1**, end-of-life colorless silicone tube) (250 mg, 3.37 mmol based on the repeating unit, for simplicity it is presumed that the silicone product is composed of 100% of silicone, because the real composition is unknown), acetic anhydride (1721 mg, 16.68 mmol, 5 equiv. based on the repeating unit of **1**), n-decane (250 mg, 1.76 mmol, 0.52 equiv. based on the repeating unit) and catalytic amounts of zinc(II) triflate (12.3 mg, 1.0 mol%, 0.034 mmol based on the repeating unit of **1**) was placed with a stir bar in a flask. The flask was sealed and the mixture was heated to 180 °C. The reaction was performed for 60 minutes (hold time) at 180 °C and with a stirring of 400 rpm. After cooling to room temperature toluene was added as standard. An aliquot of the reaction mixture was dissolved in CDCl₃ and the solution was transferred to an NMR tube. A yield of 50% for diacetoxydimethylsilane **3** and 35% of oligomers was noticed. Overall, a depolymerization rate of 85% was calculated.

### Example 17:

A mixture of poly(dimethylsiloxane) (**1**, end-of-life black silicone baking cup) (250 mg, 3.37 mmol based on the repeating unit, for simplicity it is presumed that the silicone product is composed of 100% of silicone, because the real composition is unknown), acetic anhydride (1721 mg, 16.68 mmol, 5 equiv. based on the repeating unit of **1**), n-decane (250 mg, 1.76 mmol, 0.52 equiv. based on the repeating unit) and catalytic amounts of zinc(II) triflate (12.3 mg, 1.0 mol%, 0.034 mmol based on the repeating unit of **1**) was placed with a stir bar in a flask. The flask was sealed and the mixture was heated to 180 °C. The reaction was performed for 60 minutes (hold time) at 180 °C and with a stirring of 400 rpm. After cooling to room temperature toluene was added as standard. An aliquot of the reaction mixture was dissolved in CDCl₃ and the solution was transferred to an NMR tube. A yield of 68% for diacetoxydimethylsilane **3** and 21% of oligomers was noticed. Overall, a depolymerization rate of 89% was calculated.

### Example 18:

A mixture of poly(dimethylsiloxane) (**1**, end-of-life colored silicone tube) (250 mg, 3.37 mmol based on the repeating unit, for simplicity it is presumed that the silicone product is composed of 100% of silicone, because the real composition is unknown), acetic anhydride (1721 mg, 16.68 mmol, 5 equiv. based on the repeating unit of **1**), n-decane (250 mg, 1.76 mmol, 0.52 equiv. based on the repeating unit) and catalytic amounts of zinc(II) triflate (12.3 mg, 1.0 mol%, 0.034 mmol based on the repeating unit of **1**) was placed with a stir bar in a flask. The flask was sealed and the mixture was heated to 180 °C. The reaction was performed for 60 minutes (hold time) at 180 °C and with a stirring of 400 rpm. After cooling to room temperature toluene was added as standard. An aliquot of the reaction mixture was dissolved in CDCl₃ and the solution was transferred to an NMR tube. A yield of 73% for diacetoxydimethylsilane 3 and 12% of oligomers was noticed. Overall, a depolymerization rate of 85% was calculated.

### Example 19:

A mixture of poly(dimethylsiloxane) (**1**, end-of-life silicone tube composite with plastic fibers) (250 mg, 3.37 mmol based on the repeating unit, for simplicity it is presumed that the silicone product is composed of 100% of silicone, because the real composition is unknown), acetic anhydride (1721 mg, 16.68 mmol, 5 equiv. based on the repeating unit of **1**), n-decane (250 mg, 1.76 mmol, 0.52 equiv. based on the repeating unit) and catalytic amounts of zinc(II) triflate (12.3 mg, 1.0 mol%, 0.034 mmol based on the repeating unit of **1**) was placed with a stir bar in a flask. The flask was sealed and the mixture was heated to 180 °C. The reaction was performed for 60 minutes (hold time) at 180 °C and with a stirring of 400 rpm. After cooling to room temperature toluene was added as standard. An aliquot of the reaction mixture was dissolved in CDCl₃ and the solution was transferred to an NMR tube. A yield of 46% for diacetoxydimethylsilane **3** and 17% of oligomers was noticed. Overall, a depolymerization rate of 63% was calculated.

### Example 20:

A mixture of poly(dimethylsiloxane) (**1**, end-of-life colored silicone toy) (250 mg, 3.37 mmol based on the repeating unit, for simplicity it is presumed that the silicone product is composed of 100% of silicone, because the real composition is unknown), acetic anhydride (1721 mg, 16.68 mmol, 5 equiv. based on the repeating unit of **1**), n-decane (250 mg, 1.76 mmol, 0.52 equiv. based on the repeating unit) and catalytic amounts of zinc(II) triflate (12.3 mg, 1.0 mol%, 0.034 mmol based on the repeating unit of **1**) was placed with a stir bar in a flask. The flask was sealed and the mixture was heated to 180 °C. The reaction was performed for 60 minutes (hold time) at 180 °C and with a stirring of 400 rpm. After cooling to room temperature toluene was added as standard. An aliquot of the reaction mixture was dissolved in CDCl₃ and the solution was transferred to an NMR tube. A yield of 74% for diacetoxydimethylsilane **3** and 16% of oligomers was noticed. Overall, a depolymerization rate of 90% was calculated.

### Example 21:

A mixture of poly(dimethylsiloxane) (**1**, end-of-life silicone oil) (250 mg, 3.37 mmol based on the repeating unit), acetic acid (2023 mg, 33.7 mmol, 10 equiv. based on the repeating unit of **1**), phosphorus pentoxide (797 mg, 2.8 mmol, 0.83 equiv. based on the repeating unit of **1**), n-decane (250 mg, 1.76 mmol, 0.52 equiv. based on the repeating unit) and catalytic amounts of zinc(II) triflate (12.3 mg, 1.0 mol%, 0.034 mmol based on the repeating unit of 1) was placed with a stir bar in a flask. The flask was sealed and the mixture was heated to 180 °C. The reaction was performed for 60 minutes (hold time) at 180 °C and with a stirring of 400 rpm. After cooling to room temperature toluene was added as standard. An aliquot of the reaction mixture was dissolved in CDCl₃ and the solution was transferred to an NMR tube. A yield of 74% for diacetoxydimethylsilane **3** and 16% of oligomers was noticed. Overall, a depolymerization rate of 90% was calculated.

## Claims

1. A method for the depolymerization of silicones, the method comprising the steps of:
a) heating a mixture comprising
i. a silicone,
ii. acetic anhydride and/or a mixture of acetic acid and phosphorus pentoxide,
iii. a swelling agent and
iv. a zinc catalyst
to a temperature of 160-200 °C, and
b) holding the temperature for 30-60 min.

2. The method according to claim 1, wherein the zinc catalyst is selected from the group consisting of zinc trifluoromethanesulfonate, zinc acetate, zinc formate, zinc methacrylate, zinc halide, zinc nitrate, zinc phosphate, zinc sulfate, zinc perchlorate, zinc tetrafluoroborate, zinc carbonate, zinc hydroxide, zinc amide, zinc alkoxide, zinc aryloxide, zinc alkoxide aryloxide, zinc alkyl, zinc aryl and zinc oxide (ZnO), and preferably is zinc trifluoromethanesulfonate (zinc(II) triflate).

3. The method according to claim 1 or 2, wherein 1-20, preferably 1-15, further preferred 1-10, further preferred 1.5-10 or 2-10 equivalents acetic anhydride, based on the repeating unit of the silicone, are present in the mixture.

4. The method according to one of the preceding claims, wherein the swelling agent is selected from the group consisting of C₉₋₁₆ alkane, the C₉₋₁₆ alkane preferably being decane, more preferably n-decane, and diacetoxydimethylsilane, or a mixture thereof, and wherein preferably 0.5-20, preferably 0.5-15, more preferably 0.5-10 equivalents of the swelling agent, based on the repeating unit of the silicone, are present in the mixture.

5. The method according to one of the preceding claims, wherein the swelling agent is n-decane or diacetoxydimethylsilane, or a mixture of n-decane and diacetoxydimethylsilane.

6. The method according to one of the preceding claims, wherein the temperature is 170-190 °C, more preferably 175-185 °C, most preferred 180 °C, and the temperature is held for 50-120 min, preferably 50-100 min, more preferably 50-80 min, more preferably 50-60 min, more preferably 55-60 min, most preferred 60 min.

7. The method according to one of the preceding claims, wherein steps a and b are carried out in a sealed container.

8. The method according to one of the preceding claims, wherein the mixture is stirred during steps a and b.

9. The method according to one of the preceding claims, wherein the silicone is an end-of-life silicone.

10. The method according to one of the preceding claims, wherein the silicone is a silicone oil or silicone rubber.

11. The method according to one of the preceding claims, wherein 0.01-10 mol %, preferably 0.1-10 mol %, 0.1-8.0 mol %, 0.1-5.0 mol %, 0.1-2.0 mol %, 0.1-1.0 mol %, 0.25-1.5 mol %, 0.5-1.5 mol %, or 0.5-1.0 mol %, further preferred 1.0 mol %, of the zinc catalyst, are present in the mixture, based on the molar amount of repeating unit of the silicone in the mixture.

12. The method according to one of the preceding claims, further comprising the step c) of hydrolyzing the silicone monomers obtained by the depolymerization, and recovering acetic anhydride by reacting the hydrolysis product acetic acid with phosphorus pentoxide.

13. The method according to one of the preceding claims, further comprising the repolymerization of a silicone from at least part of the depolymerization products obtained.

14. A method for recycling silicone, comprising carrying out a method of depolymerization of a silicone according to one of the preceding claims, and polymerize a silicone from products obtained by the depolymerization method of one of the preceding claims.

15. The method according to claim 14, comprising the step of hydrolyzing the monomers obtained by the method of depolymerization of a silicone according to one of claims 1 to 13, and reusing acetic acid obtained as a hydrolysis product in the repolymerization of a silicone.
